# EUROPEAN PATENT APPLICATION

(11) **EP 2 540 360 A1**
(43) Date of publication of application: **02.01.2013**
(21) Application number: 12174442.9
(22) Date of filing: 29.06.2012
(51) Int. Cl.: A63F 13/10

(54) **Game device, control method for game device, information recording medium and program**

(30) Priority: 01.07.2011 JP 2011146973
(71) Applicant: Konami Digital Entertainment Co., Ltd., Tokyo 107-8324 (JP)
(72) Inventor: Takehiro, Masashi, Tokyo, 107-8324 (JP)
(74) Representative: Epping - Hermann - Fischer

(57) **Abstract**

In a game device (300) that executes a game that can be paused and restarted, an acquirer (301) acquires information that indicates a player's position and posture in real space. A game advancer (303) advances the game based on the acquired position and posture. The game advancer (303) pauses the game when a specified stopping condition is satisfied. The game advancer (303) restarts the game when position and posture that was acquired while the game is paused matches a history of position and posture that the acquirer (301) acquired while the game is not paused.

## Description

This application relates generally to a game device, a control method for a game device, an information recording medium and a program, and more particularly, to a game device, a control method for a game device, an information recording medium and a program that, in a game that can be paused and restarted, make it possible for the player to easily pause and restart the game.

There is technology for capturing the movement of a model by taking images of the movement of a model in real space using one or a plurality of cameras, or by measuring the distance to a model using the amount of time it takes for infrared light that is irradiated on the model to reach the model, or the phase difference with the reflected wave. Recently, as disclosed in Japanese Patent No. 4117682, such technology is applied to the field of games, wherein images of a player are taken and a specified site on the player (for example, the player's head, eyes or the like) is followed, and the results of recognizing the player's movement is reflected in the game. Moreover, game devices in which the game is advanced by using the detection results of detecting the player's position and posture with a camera instead of using a device (typically called a controller) in which the player is able to input arbitrary instructions by hand or foot operations are becoming popular.

Incidentally, in a game that advances according to the results of detecting the position and posture of a player using a camera, the game can be played by the player simply moving his/her own body instead of the player having to operate a so-called controller by hand or by stepping on the controller by foot. Therefore, the player is able to more easily and more intuitively play the game; however, on the other hand, giving instructions to pause or restart the game may be difficult. Furthermore, there is a problem in that the game cannot properly advance when the player unexpectedly goes outside the imaging range, or when the position and posture of the player cannot be detected because of some kind of obstacle or the like.

In order to solve the problems described above, the object of the present invention is to provide a game device, a control method for a game device, an information recording medium and a program that, in a game that can be paused and restarted, are suitable for making it possible for the player to easily pause and restart the game.

In order to achieve the object above, the following invention is disclosed according to the principles of the present invention.

The game device according to a first aspect of the present invention is a game device that executes a game that can be paused and restarted, and comprises an acquirer and a game advancer.
The acquirer acquires information that indicates a player's posture in real space.
The game advancer advances the game based on the acquired posture.
The game advancer also:
(a) pauses the game when a specified stopping condition is satisfied; and
(b) restarts the game when posture that the acquirer acquires while the game is paused matches a history of posture that the acquirer acquired when the game is not paused.

The game that is performed by the game device of the present invention is a game whose advancement can be paused, and the paused advancement can be restarted. The player's posture is acquired by the game device, and the game advances based on the acquired posture. A log of the acquisition results of acquired posture for a specified amount of time is stored in the game device. The game may be paused or restarted based on this stored log.

In other words, when a specified stopping condition is satisfied when the game is not paused, the game is paused. The stopping condition is set, for example, based on the acquired posture of the player, the game score of the player, or the like.

The game is restarted while the game is paused when the log that was stored before the game was paused matches posture that is acquired while the game is paused. In other words, the player can restart the game while the game is paused by reproducing his/her own posture before the game was paused.

With the present invention, the player can pause or restart the game by intuitive operation of changing his/her own posture. In a game that can be paused and restarted, the player can more easily pause or restart the game.

The game advancer may determine that the stopping condition is satisfied when the acquirer no longer acquires the player's posture.

In other words, when a player's posture that is acquired from the beginning of a game can no longer be acquired after a certain time, it is presumed that for some reason the player has left the game and is trying to or has paused or ended the game. Therefore, when the player's posture can no longer be acquired, the game device pauses the game. When doing this, the player does not have to press a button or enter a command. With the present invention, in a game that can be paused and restarted, the player can more easily pause or restart a game.

The game may be a game in which only one player participates.
The game advancer may determine that the stopping condition is satisfied when the acquirer acquired the postures of a plurality of players.

In other words, in a game that is played by only one player, when it is determined during the game that there is a plurality of players near the game device, there is a possibility that proper advancement of the game will be hindered. Therefore, in a game that is played by only one player, when it is determined that a plurality of players are nearby, the game device pauses the game. With the present invention, in a game that can be paused and restarted, the player can more easily pause or restart the game, and when there is a possibility that the game will be interfered with, confusion can be avoided by pausing the game beforehand.

The game may be a game in which a specified plurality of players participates.
The game advancer may determine that the stopping condition is satisfied when the posture of another player that is not included in the specified plurality of players is newly acquired.

In other words, in a game such as a fighting game or a party game in which the game is played together by a plurality of specified players, when a number of people that exceeds the specified number of players is close to the game device during the game, there is a possibility that advancement of the game will be hindered. Therefore, in a game that is played by a specified number of players, when it is determined that a number of people that exceeds the specified number of players is close by, the game device pauses the game. With the present invention, in a game that can be paused and restarted, the player can more easily pause or restart the game, and it is possible to avoid confusion when there is a possibility that the game will be interfered with by pausing the game beforehand.

The game advancer may determine that the stopping condition is satisfied when the degree of change in the posture acquired by the acquirer within an acquisition period is equal to or less than a specified threshold value.

In other words, when the player did not change his/her own posture more than a specified amount of change within an acquisition period, it is presumed that there is a possibility that the player is not playing the game. Therefore, when the degree of change in the posture is equal to or less than a threshold value, the game device pauses the game. With the present invention, in a game that can be paused and restarted, the player can more easily pause or restart the game, and when it is estimated that there is little movement by the player, it is possible to pause the game and advise the player to take a break.

The game advancer may determine the player's score based on the posture acquired by the acquirer, and determine that the stopping condition is satisfied when the score determined within a specified judgment period is less than or equal to a specified threshold value.

In other words, when a player's score within a specified judgment period is worse than a reference value, it is presumed that the player's skill is not suitable for the level of difficulty of the game. Therefore, when the player's score is equal to or less than a threshold value, the game device pauses the game. With the present invention, in a game that can be paused and restarted, the player can more easily pause or restart the game, and when it is determined that the player's score is not good, it is possible to pause the game and prompt the player to adjust the level of difficulty.

The game advancer may play music and restart the game when the posture that the acquirer acquires while the game is paused matches either:
(x) a history of the posture that was acquired during the last measure of a plurality of measures included in the music being played that satisfies a specified continuation condition before the game was paused, or
(y) a set posture that the player is supposed to achieve in the last measure.

In other words, while the game is paused, when the log stored before the game is paused matches the posture that is acquired when the game is paused, the game is restarted. Alternatively, while the game is paused, when a preset posture matches a posture that is acquired when the game is paused, the game is restarted. More simply put, the game can be restarted when the player reproduces his/her own posture from before the game was paused while the game is paused, or by reproducing a preset posture while the game is paused. The posture that is supposed to be reproduced by the player can be one of these. With the present invention, in a game that can be paused and restarted, the player can more easily pause or restart the game.

The game advancer may determine for each of a plurality of measures whether or not the continuation condition is satisfied during the measure based on a degree of change in the posture acquired by the acquirer.

That is, it is possible to determine whether to continue the game or to pause the game based on the degree of change in the player's posture that is acquired. For example, when the player moves his/her body so that the degree of change in the player's posture during a certain measure is equal to or greater than a threshold value, the game is continued and advances to the next measure. However, when the player does not move his/her body enough and the degree of change the player's posture during that measure does not reach the threshold value, the game is paused at that measure and the game does not advance to the next measure. Therefore, the game can be paused at suitable timing according to the player's state.

The game advancer may also determine for each of a plurality of measures whether or not the continuation condition is satisfied during the measure based on the player's score during the measure.

In other words, it is possible to determine whether to continue or pause the game according to whether the player's score that is determined is good or bad. For example, when the player's score during a certain measure is better than a reference value, the game is continued and the game advances to the next measure, however, when the player's score during that measure is worse than the reference value, the game is paused at that measure and does not enter the next measure. Therefore, it is possible to pause the game at a suitable timing according to the player's skill.

The acquirer may further acquire the player's position in real space.
The game advancer may advance the game based on the acquired posture and position, and restart the game when the posture and position that are acquired by the acquirer while the game is paused match the history of the posture and position that are acquired by the acquirer while the game is paused.

In other words, not only the player's posture, but the player's position is also acquired by the game device, and the game is continued based on the acquired posture and position. A log of the acquisition results of the acquired posture and position for a specified amount of time is stored in the game device. The game can be paused or restarted based on this stored log.

When a specified stopping condition is satisfied while the game is not paused, the game is paused. The stopping condition, for example, is set based on the acquired posture and position of the player, or based on the acquired game score of the player.
Moreover, while the game is paused, when the posture and position that are stored before the game is paused match the posture and position that are acquired while the game is paused, the game is restarted. More simply put, while the game is paused, the player can restart the game by reproducing the posture and position that the player had before the game was paused.
With the present invention, the player can pause or restart the game by performing an intuitive operation of changing his/her own posture and position. In a game that can be paused and restarted, the player can more easily pause or restart the game.

A control method for a game device according to another aspect of the present invention, is a control method that is executed by a game device that executes a game that can be paused and restarted, comprising an acquisition step, and a game advancement step.
In the game advancement step:
(a) the game is paused when a specified stopping condition is satisfied; and
(b) the game is restarted when posture that is acquired in the acquisition step while the game is paused matches a posture log that is acquired in the acquisition step when the game was not paused.

With the present invention, in a game that can be paused and restarted, the player can more easily pause or restart the game.

An information recording medium according to another aspect of the present invention, stores a program that causes a computer that executes a game that can be paused and restarted to function as an acquirer and a game advancer.
The acquirer acquires information that indicates a player's posture in real space.
The game advancer advances the game based on the acquired posture.
The game advancer also:
(a) pauses the game when a specified stopping condition is satisfied; and
(b) restarts the game when posture that the acquirer acquires while the game is paused matches a posture log that the acquirer acquired when the game is not paused.

With the present invention, it is possible to cause a computer to function as a game device that operates as described above.

A program according to another aspect of the present invention causes a computer that executes a game that can be paused and restarted to function as an acquirer and a game advancer.
The acquirer acquires information that indicates a player's posture in real space.
The game advancer advances the game based on the acquired posture.
The game advancer also:
(a) pauses the game when a specified stopping condition is satisfied; and
(b) restarts the game when posture that the acquirer acquires while the game is paused matches a history of a posture that the acquirer acquired when the game is not paused.

With the present invention, it is possible to cause a computer to function as a game device that operates as described above.
The program of the present invention can be recorded on a computer readable information recording medium such as a compact disk, a flexible disk, a hard disk, a magneto-optical disk, and digital video disk, a magnetic tape, a semiconductor memory and the like.
The program above can be distributed and sold via a computer communication network separate from the computer that executes the program. The information recording medium above can also be sold and distributed separate from the computer.

A more complete understanding of this application can be obtained when the following detailed description is considered in conjunction with the following drawings, in which:
FIG. 1 is a drawing illustrating the basic construction of a typical information processing device;
FIG. 2 is a drawing that schematically illustrates the external appearance of an information processing device;
FIG. 3 is a drawing for explaining the functions of a game device;
FIG. 4 is a drawing illustrating an example of the configuration of a game screen;
FIG. 5 is a flowchart for explaining a game process;
FIG. 6A is a drawing illustrating measures and beats of a song; and
FIG. 6B is a drawing illustrating an example of time when a game task is set.

Embodiments of the present invention will be explained. In the following, in order to make the explanation easier to understand, embodiments will be explained in which the present invention is achieved by using an information processing device for a game; however, the embodiments below are only for explanation and do not limit the range of the present invention. Therefore, one skilled in the art could employ an embodiment wherein part or all of the elements have been replaced with equivalent elements, and such embodiments are also included within the scope of the present invention.

### (Embodiment 1)

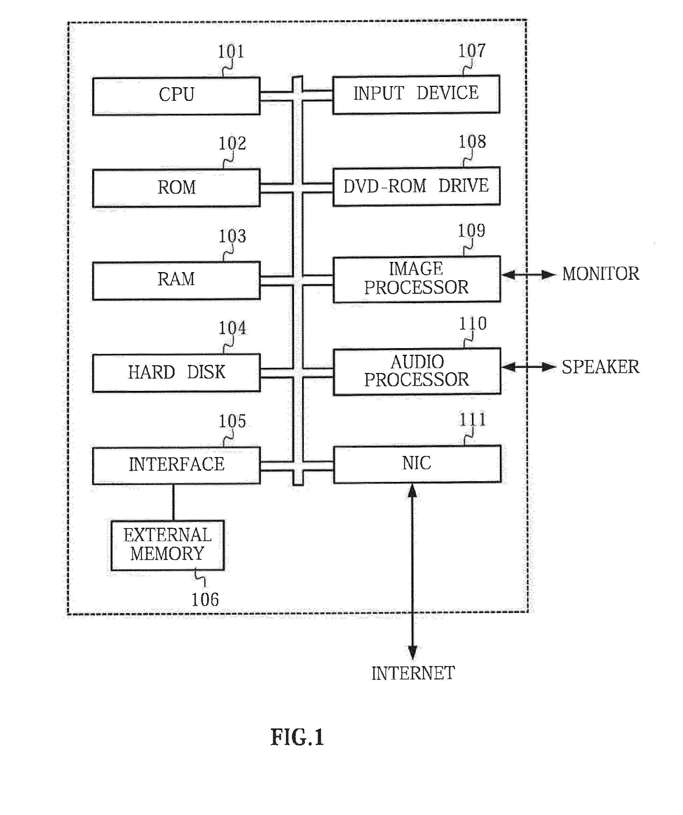

FIG. 1 is a schematic diagram illustrating the basic construction of a typical information processing device 100 that performs the function of the game device of the present invention.

The information processing device 100 comprises: a CPU (Central Processing Unit) 101, a ROM (Read Only Memory) 102, a RAM (Random Access Memory) 103, a hard disk 104, an interface 105, an external memory 106, an input device 107, a DVD-ROM (Digital Versatile Disk - Read Only Memory) drive 108, an image processor 109, an audio processor 110, and an NIC (Network Interface Card) 111.

A DVD-ROM on which a program and data for a game are recorded is mounted in the DVD-ROM drive 108, and by turning ON the power to the information processing device 100, the program is executed and the game device of this embodiment is made possible.

The CPU 101 controls the overall operation of the information processing device 100, is connected with all of the component elements and exchanges control signals and data with each element. The CPU 101 can also use an ALU (Arithmetic Logic Unit) (not illustrated in the figures) to perform arithmetic operations such as addition, subtraction, multiplication and division, logical operations such as a logical OR, logical AND, logical NOT and the like, and bit operations such as a bitwise OR, bitwise AND, bit inversion, bit shift, bit rotation and the like of data stored in a memory area such as a register that can be accessed at high speed. Furthermore, the CPU 101 comprises a coprocessor that can perform saturation calculations such as addition, subtraction, multiplication and division, or vector operations such as trigonometric functions at high speed for corresponding to multimedia processing.

An IPL (Initial Program Loader) that is executed immediately after the power is turned ON is stored in the ROM 102. By the CPU 101 executing the IPL, the program that is recorded on the DVD-ROM is read into the RAM 103, and the CPU 101 starts the activation process.

The RAM 103 is for temporarily storing data and programs; for example the program and data that are read from the DVD-ROM, and other data necessary for advancement of the game and chat communication are stored in the RAM 103. Moreover, an area for variables is provided in the RAM 103, and the CPU 101 also performs processing such as causing the ALU to directly perform operations on the values stored for the variables, storing the values stored in the RAM 103 in a register and performing operation on the values in the register, and rewriting the operation results in memory.

The hard disk 104 stores an operating system (OS), various programs, game data and the like that are necessary for overall operation control of the information processing device 100. The CPU 101 can at any time rewrite the information stored on the hard disk 104.

Data that indicates the status of a game being played, the past scores, and the like, data indicating the progress of the game, communication (recording) log data of communication with other devices using the network and the like are stored in that external memory 106 that can be freely connected or disconnected via the interface 105. The CPU 101 can at any time rewrite the information that is stored in the external memory 106. Moreover, the information processing device 100 can be connected to an expansion hard disk via an interface 105.

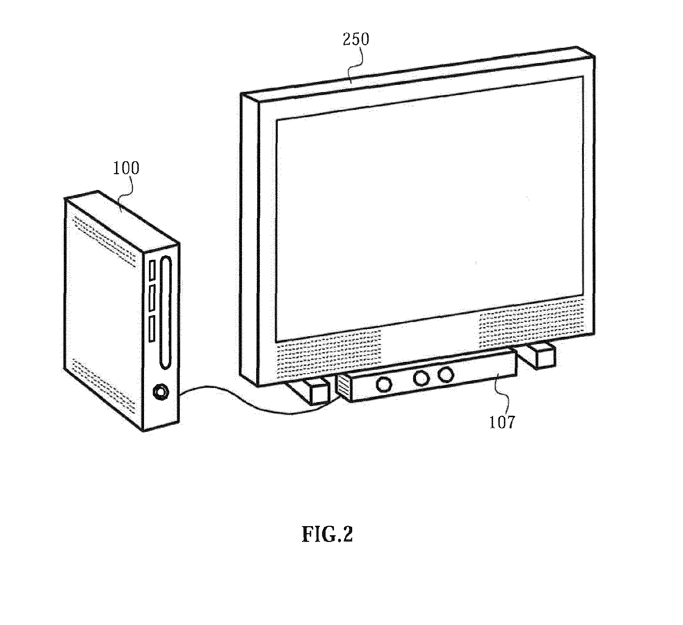

The input device 107, as illustrated in FIG. 2, is located near the monitor 250 on which the game screen is displayed. The input device 107 comprises a camera that takes images of the user. The CPU 101 analyzes the image data that expresses the images taken by the camera, and determines a site on the user (for example the user's hands, feet, head) that is included in the images. Methods for performing image analysis include, for example, analysis by pattern recognition, analysis by extracting characteristic points, and analysis by calculating spatial frequency. Imaging by the camera is performed continuously during the game.

Furthermore, the input device 107 comprises a depth sensor that measures the distance from the input device 107 to the user (or an arbitrary site on the user). For example, the input device 107 shines infrared light around, and detects the reflected waves of the infrared light. The input unit 107, based on the phase difference of the irradiated light and the reflected light, or based on the time from when the infrared light is emitted until the reflected light is detected (time of flight), finds the distance from the light-emission port of the irradiated light to an object that reflects the light (hereafter, also referred to as the "depth"). Detection of the depth by the depth sensor is repeatedly performed at specified time intervals for all directions in which the infrared light can be emitted.

By having a depth sensor, the information processing device 100 is able to know in detail the three-dimensional position and shape of the object placed in real space. More specifically, for example, presuming that as a result of the CPU 101 performing image analysis of first image data that was acquired at a first time, and second image data that was acquired at a second time, it is determined that the portion that expresses the user's head is included in both the first image data and second image data. Then, from the change in the position of the head in the first image data and the position of the head in the second image data, the CPU 101 can determine as seen from the camera how much the user's head has moved and in what direction it has moved. Furthermore, from the change in the depth of the head in the first image data and the depth of the head in the second image data, the CPU 101 can determine as seen from the camera how much the user's head has moved in the forward direction or backward direction (how close to the camera or how far from the camera the head has moved).

In this way, the CPU 101, based on the images taken by the camera of the input device 107, and on the distance (depth) that was measured by the depth sensor of the input device 107, is able to digitize and know the three-dimensional movement of the user in real space as in so-called motion capture.

For example, in a bowling game, when the player performs a motion of throwing a ball in front of the monitor 250 (in other words, in front of the input device 107), the CPU 101 recognizes that the player has performed a motion of throwing a ball. Then, according to the recognized motion, the CPU 101 advances the game. That is, the player is able to input desired instruction by freely moving his/her own body instead of holding a touch-pad type of controller. The input device 107 receives various kinds of instruction input from the player, and serves the role of a so-called "controller".

Digital image data that represents the images taken is a collection of a plurality of pixels. Typically, values that express the intensity of the three primary colors (R, G, B) are correlated with the pixels. Measuring the depth in every direction by an image depth sensor essentially means that one more dimension depth (D) is used in addition to red (R), green (G) and blue (B).

A program for making the game possible, and image data and audio data for the game are recorded in advance on the DVD-ROM that is mounted in the DVD-ROM drive 108. According to control from the CPU 101, the DVD-ROM drive 108 reads the program and data that are recorded on the mounted DVD-ROM. The CPU 101 then temporarily stores the read program and data in the RAM 103. Before starting the game, the data that is recorded on the DVD-ROM can be installed on the hard disk 104, and when executing the game, the CPU 101 can read the appropriate data from the hard disk 104 to the RAM 103.

The image processor 109 processes the data that was read from the DVD-ROM by way of the CPU 101 or the image operation processor (not illustrated in the figure) of the image processor 109, and then stores the result in the a frame memory (not illustrated in the figure) of the image processor 109. The image information that is stored in the frame memory is converted at specified synchronization timing to a video signal, and then outputted to the monitor 250 that is connected to the image processor 109.

The image operation processor can execute at high speed, operations for overlaying two-dimensional images, perform transparency operations such as α blending, and various kinds of saturation operations. The image operation processor can also execute at high speed, operations for rendering polygon information that is located in virtual three-dimensional space and to which various texture information has been added using the Z buffer method in order to obtain a rendered image of the polygons located in virtual three-dimensional space as seen from a specified line of sight from a specified viewpoint.

Furthermore, by working together, the CPU 101 and the image operation processor can use font information that defines character shapes to draw character strings as two-dimensional images to the frame memory, or on the polygon surfaces.

Moreover, by the CPU 101 and the image operation processor writing the image data that is stored in advance on the DVD-ROM to the frame memory, it is possible to display the state of the game and the like on the screen. By repeatedly performing the process for writing image data into the frame memory and displaying that image data at periodic timing (typically, vertical synchronization interrupt (VSYNC) timing), it becomes possible to display animation on the monitor 250.

The audio processor 110 converts audio data that is read from the DVD-ROM to an analog audio signal, and outputs that audio signal from a speaker. Under control of the CPU 101, audio data for sound effects or for music that are to be generated during play of the game is decoded and various sounds are outputted from the speaker.

In the case where the audio data that is recorded on the DVD-ROM is MIDI data, the audio processor 110 references sound source data of the audio processor 110 and converts the MIDI data to PCM data. Moreover, in the case of audio data that is compressed in ADPCM (Adaptive Differential Pulse Code Modulation) format, Ogg Vorbis format or the like, the audio processor 110 converts the compressed audio data to PCM data. The PCM data is converted by D/A (Digital/Analog) conversion at timing that corresponds to the sampling frequency, and by outputting the result to the speaker, audio output becomes possible.

The NIC 111 connects the information processing device 100 to a computer communication network such as the Internet. The NIC 111, for example, comprises a modem that complies to the 10BASE-T/100BASE standard when building a LAN (Local Area Network), an analog modem, ISDN (Integrated Services Digital Network) modem or ADSL (Asymmetric Digital Subscriber Line) modem for connecting to the Internet using a telephone line, a cable modem for connecting to the Internet using a cable television line, and the like, and an interface (not illustrated in the figures) that mediates between these and the CPU 101.

Next, a game that is performed by a game device 300 of this embodiment that is achieved by an information processing device 100 having the constructions described above will be explained.

The game that is executed by the game device 300 of this embodiment is a game in which the player enjoys the feel of dancing by moving his/her body, imitating the movement of a character object (hereafter, simply referred to as a "character". In this embodiment, the character is in the form of a dance instructor.) that is displayed on the monitor 250. After starting the game, the CPU 101 plays dance music and displays the character image, which represents the game task that the player is to achieve, on the monitor 250.

The game task is defined by data that expresses the position and posture that the player is supposed to take in real space being correlated with the game time. The CPU 101 displays a character image on the monitor 250 that reflects the contents of the game task. By changing the position and posture of the character as time passes, or in other words, by displaying a moving image of the character, the CPU 101 presents the game task to the player.

The player moves his/her own body while referencing the movement of the character that is displayed as a moving image on the monitor 250. The movement of the player is detected by the input device 107. For example, the position and posture of the player, or more specifically, the position and direction of both hands of the player, the position and direction of both feet of the player, or the position and direction of the player's head are recognized by the CPU 101. Based on the recognition results, the CPU 101 determines whether the player has moved his/her hands, feet, or head according to the preset game task, or in other words, the CPU 101 determines the player's score.

Moreover, in this game, by the player operating specified buttons, the CPU 101 pauses the advancement of the game, or restarts advancement of a paused game at arbitrary timing. Even when there is no button operation, the CPU 101 can pause or restart the advancement of the game at arbitrary timing according to the recognition results of the player's position or posture. This will be described in detail below.

In this embodiment, after advancement of a game has been paused, restarting the game means continuing the game from the point in time in the game where the game was paused. After advancement of a game has been paused, it is also possible to continue the game from a little before the point in time where the game was paused (part of the game is replayed). For the part of the game that is duplicated before and after the interruption, the game device 300 can preferentially use the player's score before the game was paused, without writing over the results of the player's score. Alternatively, the game device 300 can preferentially use the player's score after the game has been restarted, and write over the score results before the game was paused with the score results after the game was restarted.

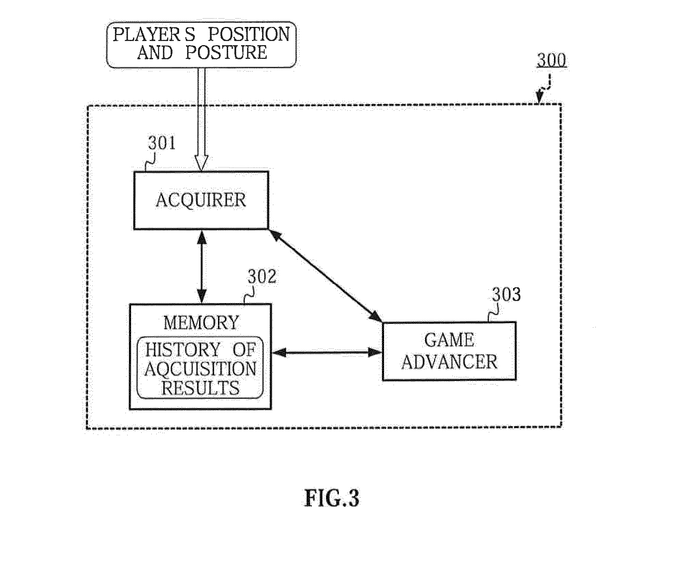

Next, the functional construction of the game device 300 of this embodiment will be explained. FIG. 3 is a drawing illustrating the functional construction of the game device 300 of the embodiment. The game device 300 comprises an acquirer 301, a memory 302 and a game advancer303.

The acquirer 301 acquires the player's position and posture in real space. For example, the player's position and posture are detected by the input device 107 at periodic timing such as VSYNC. By working together, the CPU 101 and the input device 107 function as the acquirer 301.

The player's position and posture can also be acquired from a server or another game device 300 that is connected in a network with the game device 300, or from a sensor or the like that is connected to the game device 300.

When it is determined from image analysis that the vector connecting from the acquired position of the left shoulder of the player to the tip of the left hand is in the vertical direction (perpendicular with respect to the fioor), the CPU 101 determines that the posture of the player's left hand is directly downward.

For example, the angle between a first vector that indicates the direction of the player's left hand at a time TA and a second vector that indicates the direction of the player's left hand at a time TB after that becomes one parameter that indicates the amount of change in the player's posture during the period between time TA and TB. Of course, it is also possible, instead of the left hand, to employ the position and direction of any arbitrary site on the player, such as the right hand, the left or right foot, the head, the torso, joints, or the like as indicators of the amount of change in the player's posture.

The memory 302 stores a log of the player's position and posture that were acquired from the acquirer 301 while the game is not paused. The CPU 101 and the RAM 103, working together, function as the memory 302.

In other words, the input device 107 repeatedly detects the player's position and posture at a specified periodic timing, and stores a history for a specified amount of time nearest to the data indicating the player's position and posture that were detected by the input device 107 in the RAM 103. For example, the CPU 101 defines an array variable that can store data that indicates the position and posture for N number of times (N is an integer 1 or greater), then stores that array variable in the RAM 103, and when necessary, sets detection results in that array variable. When detection results are obtained for the (N+1)th time or later, the CPU 101 deletes the oldest data, and in its place, stores the most recent data. Therefore, a history of the detection result for the most recent N number of times is stored in the RAM 103. The length of time (or in other words, the value of N) that the history is stored is arbitrary. In this embodiment, the length of time for one measure of a song that is played by the game device 300 is taken to be the length of the time that the history is stored.

The game advancer 303 advances the game based on the player's position and posture that were acquired by the acquirer 301. Working together, the CPU 101 and the image processor 109 function as the game advancer 303.

Data that expresses the character's position and posture in virtual space and that changes the position and posture over time (data expressing the game task) is correlated with the passage of time from the start of the game and stored beforehand on the hard disk 104 or DVD-ROM. The CPU 101 acquires this data that expresses the character's position and posture from the RAM 103 as required, and based on this acquired position and posture data, changes the position and posture of the character.

The character's position is expressed in coordinate values in virtual space using a global coordinate system that is defined beforehand. As the character's position, coordinate values of a representative point on the character is used. The representative point on the character could be the center of gravity point of the character.

The character's posture is represented by a combination of vectors in the global coordinate system and/or coordinate values of a plurality of points on the character. For example, in the case of a character that is a person, the posture of the left hand of the character can be represented by the direction of a vector that connects from the position of the left shoulder to the tip of the left hand, and the length of that vector. The posture of the entire character can be similarly expressed by vectors that express the direction and length of various sites on the character such as the right hand, left and right feet, torso and the like.

The shape of the surface of the character is expressed by a collection of a plurality of polygons.

In this embodiment, data that defines the position and posture of the character at the starting time T0 of the game, data that defines the position and posture of the character at time T1 after a specified amount of time ΔT has elapsed from the starting time T1 of the game (T1 = T0 + ΔT), data that defines the position and posture of the character at time T2 after a specified amount of time ΔT has further elapsed from time T1 (T2 = T1 + ΔT), and the like are stored on the hard disk 104. The character moves according to control from the CPU 101 and image processor 109 based on data that defines the position and posture of the character that was stored beforehand.

The length of the specified time ΔT is typically a length of time that corresponds to the vertical synchronization interrupt (VSYNC). By the CPU 101 sequentially changing the position and posture of the character based on the data that defines the character's position and posture at each time, it is possible to display an animated image of the character on the monitor 250.

In this embodiment, the data that defines the position and posture of the character (data that defines the game tasks) is defined so that the interval between adjacent data in time is the same. However, the game tasks do not need to be uniformly spaced. For example, in scenes where the movement of the character is fast, or in "signature poses", the time interval is small, and the motion in described in detail; however, in scenes where the movement is slow, or in scenes where movement is stopped for a while, the time interval is large, and motion is simply described. As a result, it is possible to decrease the amount of data to be stored beforehand on the hard disk 104. There is also an effect that for the player it becomes possible to view images according to each scene that are sharp and easy to understand.

Moreover, the CPU 101 controls the image processor 109, and based on the position and posture of the character that is correlated with the passage of time from the start of the game to the current time that is stored beforehand on the hard disk 104, generates images that express the character (hereafter, referred to as "character images"). In other words, the CPU 101 counts the time using a real-time clock (RTC), and calculates the difference between the time at the start of the game and the current time (or in other words, the amount of time that has elapsed since the start of the game). The CPU 101 reads from the hard disk 104 the data that defines the position and posture of the character that was correlated with the passage of time and that was calculated and stored beforehand. Then the CPU 101 generates an image of the character according to the read position and read posture. The generated image is displayed on the monitor 250.

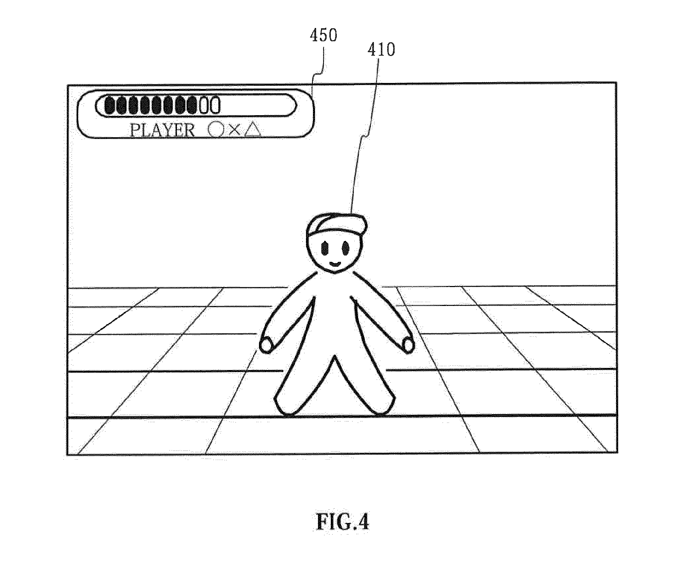

FIG. 4 illustrates an example of a game screen that is displayed on the monitor 250. The character image 410, gauge 450 and other background images are included in the game screen. The character image 410 expresses the current position and current posture that the player is supposed to be in. The CPU 101 compares the position and posture expressed by the character image 410 with the instruction inputted from the player, and the degree of matching between these is determined to be the player's score. In the situation illustrated in FIG. 4, when the CPU 101 determines from the detection result of the player's position and posture in real space that was obtained from the input device 107 that, as illustrated in the character image 410, the player is posing with both feet spread a little apart and both arms down, it is determined that the player's score is good, and the value on the gauge 450 is increased. However, when the CPU 101 determines that the player is in a different position or different posture than the character image 410, it is determined that the player's score is not good, and the value on the gauge 450 is decreased. When the value displayed on the gauge 450 becomes a specified value or less (usually zero), the CPU 101 ends the game.

In this embodiment, the character moves as if the player is looking at his/her own reflection. For example, when the character's right foot (foot on the left side as seen from the player) is moved out front, the moves his/her own left foot out front.

Moreover, based on the player's position and posture in real space that is acquired, the CPU 101 may pause the advancement of a game in progress, or restart advancement of a paused game.

More specifically, when it is determined that specified stopping conditions are met, the CPU 101 pauses the advancement of the game. When the game is paused, the CPU 101 does not present the player with new game tasks. The CPU 101 also does not determine the player's score.

The CPU 101 can take the condition "not being able to acquire the player's position and posture" as being a condition for stopping the game. When the input device 107 detected the player's position and posture up to time TC, and at time TC and later did not detect the player's position and posture, the CPU 101 presumes that at time TC the player is no longer in front of the input device 107, and determines that the stopping condition has been satisfied. The CPU 101 then pauses the advancement of the game.

For example, when the player was moving his/her body and playing the game, and then the player left from the side of the input device 107 because a visitor came or there was a telephone call, or the player took a break to go to the restroom or the like, the input device 107 no longer is able to detect the player. When this happens, it is determined that the stopping condition has been satisfied, and the game is automatically stopped. Moreover, when the player is playing the game and someone passes near the input device 107 and blocks the player from the input device 107, the input device 107 is temporarily unable to detect the player. As a result, it is determined that the stopping condition has been satisfied, and the game is automatically paused. When this happens, the player is not required to press a specified pause button.

Furthermore, in a game that is supposed to be played by only one player, the CPU 101 can take the condition that "the position and posture of a plurality of players was acquired" as being the stopping condition. When the input device 107 detected the position and posture of one player up until time TD, then at time TD and later, the input device 107 detected the position and posture of two or more players, the CPU 101 presumes that another person other than the real player has entered at time TD, and determines that the stopping condition has been satisfied. The CPU 101 then pauses the advancement of the game.

For example, when one player is playing the game and another person comes close enough to the input device 107 that the person's position and posture are detected by the input device 107, the CPU 101 determines that there is a possibility that the person will interfere with the position and posture of the player playing the game being detected correctly. It is determined that the stopping condition has been satisfied, and the game is automatically paused. When it is presumed that the surrounding environment is not suitable for playing the game, the game device 300 can avoid confusion by pausing the game.

Moreover, in a game that is being played by a specified number of players, the CPU 101 can take the condition of "the posture of a person other than a specified player has been newly acquired" as the stopping condition. For example, in a game that is played by two players, when the input device 107 detected the position and posture of two players until time TE, and then at time TE and later detected the position and posture of a third player, the CPU 101 presumes that the other person has interfered with the real players of the game at time TE, and determines that the stopping condition has been satisfied. The CPU 101 then pauses the advancement of the game. Of course, it is possible for there to be three or more players. When the CPU 101 determines that there are more than the specified number of persons near the game device 300, it should pause the game.

A person (another person) that is not recognized at the beginning of the game by the game device 300, and then is recognized during the game is not necessarily the "player" of the game. However, in this embodiment, when a plurality of "people" are recognized by the game device 300, there is a possibility that one is the player, so all are called "players".

Moreover, the CPU 101 can take the condition of "the degree of change in the player's position or the degree of change in the player's posture during a preset acquisition period is at a threshold value or less" to be the specified stopping condition above. When the degree of change in the player's position from a time TG to a time TG is greater than a threshold value, the CPU 101 presumes that the player is playing the game. However, when the degree of change in the position from time TG to time TG is equal to or less than a threshold value, the CPU 101 presumes that the player is not playing the game, or that the player is going to stop playing the game, and determines that the stopping condition is satisfied. The CPU 101 then pauses the advancement of the game.

For example, when the movement of the player's feet is active in the Xth measure of the music being played, however, movement of the player's feet stops in the (X + 1)th measure, the CPU 101 presumes that the player is resting from the (X + 1)th measure, so that it is determined that the stopping condition has been satisfied and the game is automatically paused. The game device 300, depending on the score, can prompt the player to select a new selection of music (in other words, select a new game task), or can suitably allow the player to take a break. When the player's movement stops or becomes slow, the CPU 101 pauses the game at good timing such as between measures in the music.

The acquisition period for acquiring the posture and position does not have to be a preset fixed period such as a measure in the music, and could be a period in the past that is closest to the current game time. For example, when the acquisition period is set to "the most recent 5 seconds", then when the degree of change in the position or the posture during the most recent 5 seconds is greater than a threshold value, the CPU 101 presumes that the player is playing the game. However, when the degree of change in the position or posture during the most recent 5 seconds is equal to or less than a threshold value, the CPU 101 presumes that the player is not playing the game, and determines that the stopping condition has been satisfied. The CPU 101 then pauses the advancement of the game. When the player's movement stops or becomes slow, it is possible to immediately pause the game regardless of whether the music is between measures.

The CPU 101 can also take the condition "the ratio of the actual degree of change in the player's position or the degree of change in the player's posture with respect to an estimated degree of change in the player's position or the degree of change in the player's posture that is estimated according to a preset game task is equal to or less than a threshold value" as being the specified stopping condition above. When the ratio of the degree of change in the player's position or posture that is actually detected during a period from a time TH to a time TI with respect to the estimated degree of change in the position or posture that the player is supposed to achieve during the period from time TH to time TI is equal to or greater than a specified value, the CPU 101 continues the game. However, when this ratio is less than a specified value, the CPU 101 presumes that the player is resting, or that the player is not playing according to the game task, and determines that the stopping condition has been satisfied. The CPU 101 then pauses the advancement of the game.

For example, in a portion of the music where there are comparatively few game tasks, the estimated degree of change in the player's position or posture is small, and it is estimated that the actual movement of the player's body will be small. That is, in a portion of the music where there are comparatively few game tasks, there is a high possibility that the game tasks will be achieved even with little movement of the player's body. Therefore, by taking into consideration the ratio with respect to the estimated degree of change, the CPU 101 is able to more accurately determine the stopping condition in line with the game tasks.

Alternatively, in a portion of the music where there are comparatively many game tasks, the estimated degree of change in the player's position or posture is large, and it is also estimated that the number of actual movements of the player's body will be large. In a portion of the music where there are comparatively many game tasks and the detected degree of change in the player's position and posture is less than a threshold value, there is a possibility that the player is tired or that the game task is difficult for the player. Therefore, by determining whether or not the stopping condition is satisfied according to the ratio of the actual degree of change with respect to the estimated degree of change, the CPU 101 is able to more accurately determine the stopping condition in line with the player's condition. The game device 300 can pause the game at timing that is suitable to the player's condition or skill.

Moreover, the CPU 101 can take the condition "the player's score during a specified determination period is less than a threshold value" as being the specified stopping condition above. When the score is equal to or greater than a threshold value during a period from a time TJ to a time TK, the CPU 101 continues the game. However, when the score is less than the threshold value during the period from time TJ to time TK, the CPU 101 determines that the level of difficulty of the game is not suitable to the player's skill, and determines that the stopping condition has been met. The CPU 101 then pauses the advancement of the game.

For example, when up to the Xth measure of a selection of music that is being played, a player's score was not worse than a threshold value, however, from the (X + 1)th measure on the player's score become worse than a threshold value, it is determined that there is a possibility that from around the (X + 1)th measure, the level of difficulty has become too difficult for the player. It is determined that the stopping condition has been satisfied, and the game is automatically paused. Depending on the score, the game device 300 can prompt the player to select new music, or to take a suitable amount of rest.

After the game has paused, the CPU 101 copies the history of the player's position and posture, which was stored in the RAM 103 at the instant that the game was paused, to a specified area in memory, and saves the data. This saved data is the history for a specified amount of time before the game was paused, and is used when restarting the game as will be described later. Even while the game is paused, the player's position and position is detected and sequentially stored in the RAM 103, so that the CPU 101 is able to save the history at the instant the game was paused so that it is not written over and lost.

While the game is paused, the CPU 101 displays on the monitor 250 a character image 410 that was generated based on data indicating the position and posture of the character during a specified amount of time that is stored in advance on the hard disk 104 or the like. For example, when this specified time is "10 seconds", a character image 410 that indicates the game task for 10 seconds immediately before the game was paused is repeatedly displayed like playing back a video. By viewing the displayed character image 410, it is possible for a player to easily know the kind of situation the game was paused in.

Together with displaying a character image 410 that was generated based on the position and posture of the character during a specified amount of time, the CPU 101 preferably also replays the portion of the music that corresponds to that specified amount of time, and outputs that music from the speaker.

Advancement of a paused game is restarted based on the player's position and posture that were detected before the game was paused, and the player's position and posture that were detected while the game was paused.

In other words, even while the game is paused, the input device 107 detects the player's position and posture. The CPU 101 then stores the data indicating the player's position and posture that were detected in the RAM 103 for a specified amount of time. Then, while the game is paused, the CPU 101 compares the saved history of the position and posture, or in other words, the data indicating the history immediately before the game was paused with the data for the position and posture that was detected for a specified amount of time while the game was paused. When, as a result of the comparison, it is determined that the data matches, the CPU 101 restarts the game, and when the data does not match, the CPU 101 continues to pause the game. Simply put, while the game is paused, by the player reproducing the same position and posture as before the game was paused, the paused game is released and restarted.

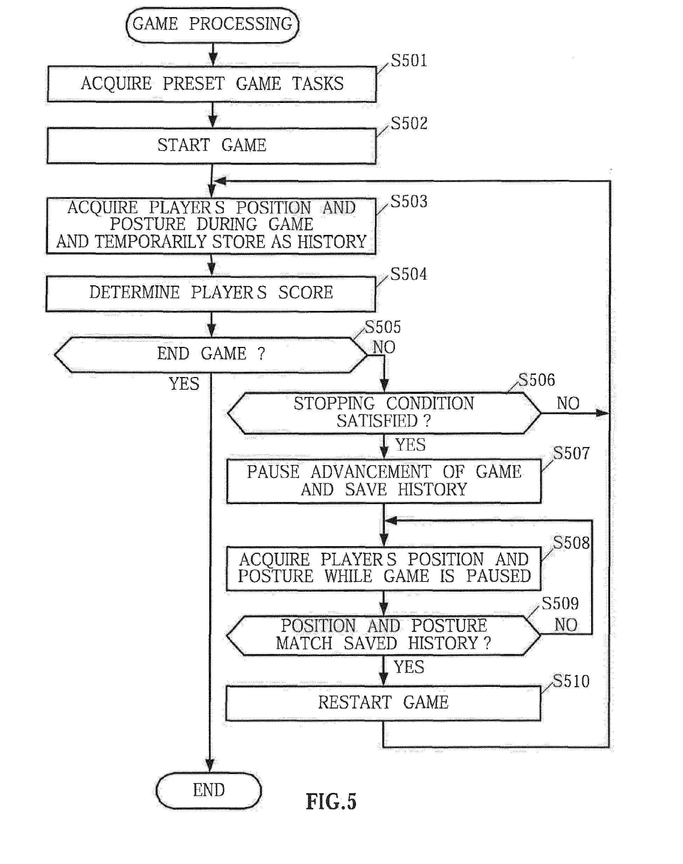

Next, game processing that is executed by each of the components of the game device 300 will be explained using the flowchart in FIG. 5. In this embodiment, together with playing music, the game device 300 displays a video of a character image 410 on the monitor 250 in order to schematically illustrate the movement that the player is supposed to perform. The game that is performed by the game device 300 of this embodiment is a dance game in which the player has a feeling of dancing by moving his/her body according to the movement of a character image 410.

After receiving an instruction to start the game, the CPU 101 acquires information that indicates a preset game task (step S501). The CPU 101 also acquires music data. The information that indicate the game task and music data are stored on a hard disk 104 or DVD-ROM.

The CPU 101 then starts the game (step S502). The CPU 101 decodes the acquired music data, and starts playing the music. The CPU 101 generates a character image based on the acquired information that indicates the game task, and starts displaying that character image 410 on the monitor 250. The position and posture of the character image 410 in virtual space expresses the position and posture that the player is supposed to take in real space.

After the game starts, the input device 107 repeatedly detects the player's position and posture at specified periodic timing, and the CPU 101 acquires the detection results. The CPU 101 stores the history for the specified amount of time of data indicating the player's position and posture that were acquired in the RAM 103 (step S503).

The CPU 101 determines the player's score based on the information acquired in step S501 indicating the game task, and the data acquired in step S503 indicating the player's position and posture (step S504).

The CPU 101 determines whether or not to end the game (step S505). For example, when the address of the portion of data of the music currently being played reaches the end, or when the value indicated by the gauge 450 reaches a specified value or less (typically zero), or when an instruction to end the game is received from the player, the CPU 101 determines to end the game.

When the CPU 101 determines to end the game (step S505: YES), the CPU 101 ends playing the music, ends the display of the character image 410 using video images, and ends the game process.

On the other hand, when the CPU 101 determines to continue the game (step S505: NO), the CPU 101, based on the history that is stored in the RAM 103, determines whether or not the specified stopping condition as described above for pausing the advancement of the game is satisfied (step S506).

When it is determined that the stopping condition has not been satisfied (step S506: NO), the CPU 101 returns to the processing of step S503 and continues the game. However, when it is determined that the stopping condition has been satisfied (step S506: YES), the CPU 101 pauses the advancement of the game, and causes the stored history to be saved in a specified memory area (step S507). The saved data becomes material for performing judgment when the CPU 101 determines whether or not to restart the game.

While the game is paused, the CPU 101 acquires the position and posture of the player, which is the detection result from the input device 107 (step S508). The CPU 101 acquires data that indicates the player's position and posture, and stores the acquired data that indicates the player's position and posture in the RAM 103.

The CPU 101 determines whether or not the position and posture that is indicated by the history data saved in step S507 coincides with the position and posture that is indicated by the data acquired in step S508 (step S509).

Here, the CPU 101 determines that there is a match not only when there is a perfect match between the "current" position of the player acquired in step S508 and the "past" position of the player that is indicated by the log data saved in step S507, but also when the difference between these positions is within a specified allowable range. Similarly, the CPU 101 determines that there is a match not only when there is a perfect match between the "current" posture of the player acquired in step S508 and the "past" posture of the player that is indicated by the log data saved in step S507, but also when the difference between these postures is within a specified allowable range.

In this embodiment, the CPU 101 determines that the saved history data and the data acquired while the game is paused match, when the difference between positions is within a specified allowable range and the difference between postures is within a specified allowable range.

When the CPU 101 determined that the history data saved in step S507 does not match the data acquired in step S508 (step S509: NO), processing returns to the processing of step S508, and the game remains paused until the data matches.

However, when it is determined that the history data saved in step S507 matches the data acquired in step S508 (step S509: YES), the CPU 101 restarts the paused game (step S510). The CPU 101 then returns processing to the processing of step S503, and causes the game to advance.

With this embodiment, for a game that can be paused and restarted, the player can easily pause or restart the game. When the player, due to some unforeseen circumstance while playing a game, is unable to continue playing, or when there is a possibility that the player will not be able to continue playing, the game device 300 automatically pauses the game, and thus it is possible to avoid confusion.

### (Embodiment 2)

Next, another embodiment of the present invention will be explained. In this embodiment, in a game that uses music, the invention is devised so that the condition for restarting a paused game is a condition related to the music, and the player can more easily restart the game.

A game advancer 303 acquires music data from the hard disk 104 or the like, then decodes the music data and plays the music. The audio for the music played is outputted from a speaker. The CPU 101 and the audio processor 110 work together to function as the game advancer 303.

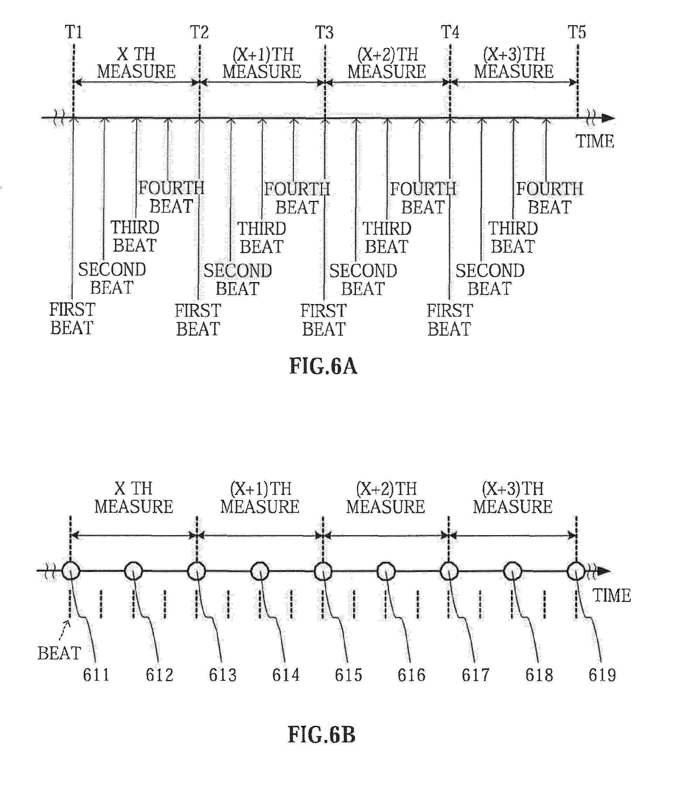

As illustrated in FIG. 6A, the music comprises a plurality of measures, and there is a plurality of beats in each measure. In FIG. 6A, the music is four beats per measure; however, the number of beats is arbitrary.

The CPU 101 can define the time when a game task is to be set by the number of seconds from the start of the game or the like. Moreover, the CPU 101 can use the measures and beats to define the time when a game task is to be set, such as the Yth beat in the Xth measure (X and Y are integers that are 1 or greater), and can determine the player's score at timing such as the break between measures, or at each beat. For example, in FIG. 6B, in music having four beats per measure, the CPU 101 sets game tasks 611 to 619 at the first and third beat of each measure. By matching the measures and beats of the music at the time indicated by the game task, the player is able to easy get the rhythm, and so the game becomes more interesting.

The CPU 101 can also set the game tasks at timing exactly between beats, or on the so-called "up beat".

The CPU 101 stores a history of the player's position and posture, which were detected by the input device 107 at that last measure of the plurality of measures included in the music being played that satisfies the specified continuation condition, in the RAM 103. This continuation condition will be described later.

Moreover, the CPU 101, as in the embodiment above, pauses the advancement of the game or restarts a paused game based on the player's position and posture that are detected by the input device 107.

In this embodiment, the CPU 101 pauses the game at a break between measures. For example, in FIG. 6A, the CPU 101 pauses the game at time T1 of the first beat of the Xth measure, time T2 of the first beat of the (X+1)th measure, at time T3 of the first beat of the (X+2)th measure, or at time T4 of the first beat of the (X+3)th measure, or after these times T1, T2, T3, T4.

When the game time is at a break between measures, the CPU 101 determines whether or not the score at the final measure that has been played satisfies a specified continuation condition. The specified continuation condition is a condition for deciding whether or not to advance the game from a certain measure to the next measure. For example, in FIG. 6A, a band of time that corresponds to the Xth measure of the music has passed, the CPU 101 determines whether or not the last measure that has been played, or in other words, the Xth measure satisfies the specified continuation condition. When it is determined that the continuation condition is satisfied, the CPU 101 advances the game to the (X+1)th measure. On the other hand, when it is determined that the continuation conditions has not been satisfied, the CPU 101 pauses the game after the music of the Xth measure is played.

For example, the CPU 101 can take the condition "the player's score in a measure is equal to or greater than a specified value" as being the continuation condition. When the time in the game reaches time T2 between the Xth measure and the (X+1)th measure, the CPU 101 calculates the player's score for the game task included in the Xth measure, and determines whether or not the calculated score is equal to or greater than a specified value. When the score of the Xth measure is equal to or greater than a specified value, the CPU 101 determines that the Xth measure satisfies the continuation condition, then presents the game task included in the (X+1)th measure and continues the game. However, when the score of Xth measure is less than the specified value, the CPU 101 determines that the Xth measure did not satisfy the continuation condition, and pauses the game without determining the score of the game task included in the (X+1)th measure.

When the game task is set at or near the border between the Xth measure and the (X+1)th measure, and it is determined that the Xth measure did not satisfy the continuation condition, the CPU 101 can provisionally determine the score of the game task at that border, and then pause the game without including the provisional score for that game task in the total overall score for the game.

The CPU 101 can take the condition "the degree of change in a player's position in a measure is equal to or greater than a specified value" as being the continuation condition. The CPU 101 calculates the difference in the player's position that was detected at two arbitrary times during a measure, for example at the first beat and fourth beat of the Xth measure, and determines whether or not the calculated difference in the positions is equal to or greater than a specified value. When the difference in the positions is equal to or greater than a specified value, the CPU 101 determines that the Xth measure satisfies the continuation condition, then presents the game task that is included in the (X+1)th measure and continues the game. On the other hand, when the difference in the positions is less than a specified value, the CPU 101 determines that the Xth measure does not satisfy the continuation condition, and pauses the game without determining the score of the game task included in the (X+1)th measure.

The CPU 101 can take the condition "the degree of change in a player's posture in a measure is equal to or greater than a specified value" as being the continuation condition. The CPU 101 calculates the difference in the player's posture that was detected at two arbitrary times during a measure, for example at the first beat and fourth beat of the Xth measure, and determines whether or not the calculated difference in the postures is equal to or greater than a specified value. When the difference in the postures is equal to or greater than a specified value, the CPU 101 determines that the Xth measure satisfies the continuation condition, then presents the game task that is included in the (X+1)th measure and continues the game. On the other hand, when the difference in the postures is less than a specified value, the CPU 101 determines that the Xth measure does not satisfy the continuation condition, and pauses the game without determining the score of the game task included in the (X+1)th measure.

The CPU101 can take the condition "the stopping conditions above are not satisfied" as being the continuation condition. For example, when the stopping condition above is "the player's position and posture cannot be acquired", the continuation condition is "the player's position and posture is continuously acquired". When the player's position and posture are continuously detected by the input device 107 during the Xth measure, the CPU 101 determines that the Xth measure satisfies the continuation condition, and after the Xth measure, advances the game to the (X+1)th measure. On the other hand, when the player's position and posture are not detected by the input device 107 at a time during the Xth measure, the CPU 101 determines that the Xth measure does not satisfy the continuation condition, so pauses the game after the Xth measure.

The CPU 101 can take the condition "the ratio of the degree of change in the player's position or posture with respect to the estimated degree of change in the player's position or posture that is estimated for a preset game task during a predetermined period is equal to or greater than a threshold value. When the degree of change in the players position or posture during the Xth measure is equal to or greater than a threshold value, the CPU 101 determines that the Xth measure satisfies the continuation condition, so after the Xth measure, advances the game to the (X+1)th measure. However, when the degree of change in the player's position or posture during the Xth measure is less that the threshold value, the CPU 101 determines that the Xth measure does not satisfy the continuation condition, so after the Xth measure, pauses the game.

The timing at which the game is paused can be the border between adjacent measures, or can be at an arbitrary time in the next measure after the last measure for which the continuation condition was satisfied.

As described above, the CPU 101 stores the history of the player's position and posture, which were detected by the input device 107 in the last measure of the plurality of measures included in the music being played that satisfied continuation condition, in the RAM 103. Then, when the position and the posture of the player that are detected while the game is paused matches the history of the position and posture that is stored in the RAM 103, the CPU 101 restarts the game. In other words, when the movement of the player that is detected by the input device 107 for the last measure that satisfies the continuation condition is reproduced by the player while the game is paused, the game is restarted.

While the game is paused, the CPU 101 uses the history of the player's position and posture (player's position and posture that were detected by the input device 107 for the last measure that satisfies the continuation condition) that is stored in RAM 103 to generate a character image 410, and displays the generated character image on the monitor. The player can check his/her own movement for the last measure that satisfied the continuation condition, thus making it easy to restart the game.

Alternatively, while the game is paused, the CPU 101 can use a preset position and posture for the character that is stored on the hard disk 104 or the like to generate a character image 410, and display that generated character image 410 on the monitor. Then, when the position and posture that are detected by the input device 107 while the game is paused matches the set position and posture that the player is supposed to achieve for the last measure that satisfies the continuation condition (position and posture that indicate the game task), the CPU 101 can restart the game. The player is able to check his/her own movement for the last measure that satisfies the continuation condition (method of moving the body as expressed by the game task), thus making the game easy to restart.

The CPU 101 may generate a first character image by using the position and posture detected by the input device 107 for the last measure that satisfies the continuation condition, generate a second character image by using a position and posture that are preset for the character, and display both the first and second character images on the monitor.

The CPU 101 can store in the RAM 103 the history for a specified amount of time of the position and posture detected by the input device 107 for not only the last measure that satisfies the continuation condition, but for a specified number of measures that includes the last measure that satisfies the continuation condition. Then when the history stored in the RAM 103 matches the position and posture for a specified amount of time that was detected by the input device 107 while the game is paused, the CPU 101 can restart the game. The length of this specified time is preferably the same as the length of the time that corresponds to the history stored in the RAM 103.

The present invention is not limited to the embodiments described above, and various variations and applications are possible. Moreover, the component elements of the embodiments described above can be freely combined.

In the embodiments above, an example of a dance game was explained, however, the game contents are not limited by the present invention.

In each of the embodiments above, the game device 300 acquires both the player's position and posture in real space; however, of the position and posture, it is also possible to only acquire the posture. Then, when the history of the player's posture immediately before the game is paused matches the posture of the player while the game is paused, the game device 300 can restart the paused game.

The present invention can be applied to a network game that is executed in a game system that comprises devices that are operated by each of a plurality of players, and a server that is connected with these devices via a network. Via the network, the server acquires and stores each player's position and posture that is detected by the respective device, and based on the acquired positions and postures of each player, can advance, pause or restart the game. In this case, the server can be the game device 300 having the acquirer 301, memory 302 and game advancer 303.

It is also possible to apply the invention to a game that is executed in a game system wherein the devices operated by a plurality of players are taken to be game devices 300 having an acquirer 301 and game advancer 303, and for the server to have a memory 302. In other words, the position and posture of each player that are acquired from each device are stored in the server via the network, and each devices advances, pauses or restarts the game by acquiring the positions and postures of the players that are stored in the server.

A program for making a computer function as all or part of the of the game device 300 described above can be stored on a computer readable recording medium such as a memory card, a CD-ROM, DVD, MO (Magneto Optical disk) and the like and distributed, and by installing this in a separate computer, that computer can be caused to function as the units described above, or can be caused to execute the processes described above.

Furthermore, it is also possible to store a program on a disk drive or the like of a server on the Internet, and for example, superimpose that program on a carrier wave and download the program onto a computer.

As explained above, the present invention is able to provide a suitable game device, a control method for a game device and a program that, in a game that can be paused and restarted, make it possible for the player to easily pause or restart the game.

Having described and illustrated the principles of this application by reference to one (or more) preferred embodiment(s), it should be apparent that the preferred embodiment(s) may be modified in arrangement and detail without departing from the principles disclosed herein and that it is intended that the application be construed as including all such modifications and variations insofar as they come within the spirit and scope of the subject matter disclosed herein.

## Claims

1. A game device (300) that executes a game that can be paused and restarted, **characterized by** comprising:
an acquirer (301) that acquires information that indicates a player's posture in real space; and
a game advancer (303) that advances the game based on the acquired posture; wherein
the game advancer (303):
(a) pauses the game when a specified stopping condition is satisfied; and
(b) restarts the game when the posture that the acquirer (301) acquires while the game is paused matches a history of a posture that the acquirer (301) acquired while the game is not paused.

2. The game device (300) according to claim 1, **characterized in that**
the game advancer (303) determines that the stopping condition is satisfied when the acquirer (301) can no longer acquire the player's posture.

3. The game device (300) according to claim 1, **characterized in that**
the game is a game in which only one player participates; and
the game advancer (303) determines that the stopping condition is satisfied when the acquirer (301) acquired the postures of a plurality of players.

4. The game device (300) according to claim 1, **characterized in that**
the game is a game in which a specified plurality of players participates; and
the game advancer (303) determines that the stopping condition is satisfied when the posture of another player that is not included in the specified plurality of players is newly acquired.

5. The game device (300) according to claim 1, **characterized in that**
the game advancer (303) determines that the stopping condition is satisfied when the degree of change in the posture acquired by the acquirer (301) within an acquisition period is equal to or less than a specified threshold value.

6. The game device (300) according to claim 1, **characterized in that**
the game advancer (303) determines the player's score based on the posture acquired by the acquirer (301), and determines that the stopping condition is satisfied when the score determined within a specified judgment period is equal to or less than a specified threshold value.

7. The game device (300) according to claim 1, **characterized in that**
the game advancer (303) plays music and restarts the game when the posture that the acquirer (301) acquires while the game is paused matches either :
(x) the history of the posture that was acquired during the last measure of a plurality of measures included in the music being played that satisfies a specified continuation condition before the game was paused, or
(y) a set posture that the player is supposed to achieve in the last measure.

8. The game device (300) according to claim 7, **characterized in that**
the game advancer (303) determines for each of a plurality of measures whether or not the continuation condition is satisfied during the measure based on a degree of change in the posture acquired by the acquirer (301).

9. The game device (300) according to claim 7, **characterized in that**
the game advancer (303) determines for each of a plurality of measures whether or not the continuation condition is satisfied during the measure based on the player's score during the measure.

10. The game device (300) according to claim 1, **characterized in that**
the acquirer (301) further acquires the player's position in real space; and
the game advancer (303) advances the game based on the acquired posture and position, and restarts the game when the posture and position that are acquired by the acquirer (301) while the game is paused match the history of the posture and position that are acquired by the acquirer (301) while the game is not paused.

11. A control method for a game device that is executed by a game device that executes a game that can be paused and restarted, **characterized by** comprising:
an acquisition step of acquiring information that indicates a player's posture in real space; and
a game advancement step of advancing the game based on the acquired posture; wherein
in the game advancement step:
(a) the game is paused when a specified stopping condition is satisfied; and
(b) the game is restarted when the posture that is acquired in the acquisition step while the game is paused matches a history of a posture that is acquired in the acquisition step while the game is not paused.

12. A computer readable information recording medium on which a program is stored that causes a computer that executes a game that can be paused and restarted to function as:
an acquirer (301) that acquires information that indicates a player's posture in real space; and
a game advancer (303) that advances the game based on the acquired posture; wherein
the game advancer (303):
(a) pauses the game when a specified stopping condition is satisfied; and
(b) restarts the game when the posture that the acquirer (301) acquires while the game is paused matches a history of a posture that the acquirer (301) acquired while the game is not paused.

13. A program that causes a computer that executes a game that can be paused and restarted to function as:
an acquirer (301) that acquires information that indicates a player's posture in real space; and
a game advancer (303) that advances the game based on the acquired posture; wherein
the game advancer (303):
(a) pauses the game when a specified stopping condition is satisfied; and
(b) restarts the game when the posture that the acquirer (301) acquires while the game is paused matches a history of a posture that the acquirer (301) acquired while when the game is not paused.
